# EUROPEAN PATENT APPLICATION

(11) **EP 0 595 550 A1**
(43) Date of publication of application: **04.05.1994**
(21) Application number: 93308395.8
(22) Date of filing: 21.10.1993
(51) Int. Cl.: B32B 27/08, B32B 7/10, C09J 151/06, C08J 5/12, C08L 23/02

(54) **Polyolefin substrates with improved adhesion properties**

(30) Priority: 26.10.1992 GB 9222490; 27.09.1993 US 127663
(71) Applicant: ROHM AND HAAS COMPANY, Philadelphia Pennsylvania 19105 (US)
(72) Inventor: Harvey, Noel Gray, North Wales, Pennsylvania 19454 (US)
(74) Representative: Angell, David Whilton

(57) **Abstract**

The adhesion to polyolefin substrates of acrylic-based or other protective polymers, for example in the form of a plastic coating or a latex or solvent-based paint, is improved by use of a segmented copolymer of a polyolefin and a poly(methacrylate) in the form of a laminate or tie-coat adhering to the polyolefin.

## Description

This invention is concerned with imparting improved adhesion properties to polyolefin substrates, especially polypropylene. These properties may improve the adhesion of acrylic-based or other protective polymers which may be applied, for example, in the form of a plastic coating or a latex or solvent-based paint; of pressure sensitive adhesives, which adhesives may serve for example to bond cloth, carpet, non-woven fabrics or plastics; or of inks and colorants.

Matrix polyolefins used as substrates for acrylic plastics or latices, for example where the latter impart weatherability, decorative effects, or printability, are useful in the assemblage of automobiles and other vehicles, such as automotive interiors or exteriors, trunks (boots), truck (lorry) cabs, railroad car interiors, van (caravan) trim, equipment housing, furniture, where they offer advantages in cost and formability over metal or wood. Unfortunately, the polyolefins such as polypropylene or polyethylene do not adhere well without special treatment.

GB-A-92-164,078 teaches that acrylic plastics, more specifically polymers of methyl methacrylate, are useful for the above purposes when combined with a cheaper, tougher polyolefin in a laminar structure (which structure may require a laminating adhesive in the case of polyolefins to prevent delamination), and disclosed many potential uses for such a combination. US-A-4,957,974 discloses the use of specific graft copolymers of polyolefins and polymethacrylates, when further blended with polypropylene or other polyolefins, as useful for improving printability, and the graft copolymers as tie layers between otherwise incompatible polymers. In US-A-5,035,933 it is disclosed that such graft copolymers are useful as tie layers between polyolefins and certain barrier polymers.

This invention is concerned to provide a composition based on an inexpensive polyolefin matrix which can be readily converted to a matrix with a polar surface which can more readily accept coatings such as paint or ink.

We have now found that a laminate with the desirable surface qualities enumerated above comprises a composite of:
a) a polyolefin substrate, preferably polypropylene or polyethylene, optionally rubber-modified with a rubbery polyolefin or optionally glass-filled;
b) a tie layer of a film or sheet of thickness from 0.0025 mm. to 0.8 mm. comprising segmented polymer having at least one segment of non-polar polyolefin formed predominately from ethylene or propylene, preferably propylene, and having at least one polar segment of polymer formed from at least 80 weight percent of alkyl methacrylate, preferably methyl methacrylate, the weight-average molecular weight of all segments being above 20,000, the ratio of polar segments to non-polar segments being from 9:1 to 1:4;
c) a polar polymer, preferably at least one of poly(methyl methacrylate), poly(vinyl chloride), acrylonitrile-butadiene-styrene (ABS), polycarbonate or poly(butylene terephthalate) in sheet or film form and of from 0.0025 mm. to 50 mm. in thickness.

The polyolefin matrix or substrate may be any of the widely used polyolefin materials, such as homopolymers of propylene, ethylene, butene-1, and 4-methylpentene-1, or copolymers thereof. Preferably the polyolefin is polypropylene or polyethylene, and is a relatively rigid, rather than a highly flexible or rubbery, substrate.
The substrate may contain rubbery polymer, such as ethylene-propylene or ethylene-propylene-diene rubbers to an extent sufficient to toughen without greatly reducing the rigidity. The substrate may also be reinforced, such as with glass fibers or fillers.

The polar polymer may in general be any which will contain atoms other than carbon or hydrogen, and may for example be a polyester, polyamide, polyacetal, polysulfide, polycarbonate, polymer formed from vinyl acetate, acrylic esters, methacrylic esters or acrylonitrile. Preferred are those polar polymers which are amorphous, clear, and readily processable into thin sheet or film. Such include polycarbonate, poly(alkylene terephthalates), and blends thereof; poly(alkyl methacrylates), especially poly(methyl methacrylate); poly(vinyl chloride); and acrylonitrile-styrene copolymers, including rubber-modified versions thereof, such as acrylonitrile-butadient-styrene (ABS).

For coloring or decorating or protecting the composite, one may apply a paint, ink, or coating to the adhered polar polymer in sheet or film form. The polymer of methyl methacrylate or of vinyl chloride may be rubber-modified with a multi-stage impact modifier. The polar polymer may further contain appropriate stabilizers against degradation by light. As the process involves polar polymers which are in general more rigid (of higher modulus) than the polyolefin substrate, the process is best employed on flat sheets of the polyolefin.

The tie layer described herein is readily processable into thin sheet or film, may be in oriented form, wherein it may be as thin as about 0.0025 mm., is readily laminated either in a "sandwich" operation, or sequentially, and may be prepared by methods such as those taught in US-A-4,957,974 or 5,247,024. We define film as having a thickness of 50 mils (1.27mm) or less and sheet as having a thickness greater than 50 mils (1.27 mm).

The tie coat may be applied by known methods; for example by extrusion of the tie-coat onto either the acrylic polymer or the polyolefin, either as a co-extrudate or onto an already formed film, followed by application of the remaining polymer with appropriate temperature and pressure conditions to optimize lamination.

Lamination of all three components simultaneously, such as by co- extrusion or co-injection molding of all components, is also possible. The use of stamping methods to prepare the three-component laminates is also effective. The polar polymer may be a cast or extruded sheet, a molded plaque, or isolated as a powder after preparation in latex or solution form, and may contain impact modifiers, such as core/shell polymers based on butadiene or butyl acrylate/styrene cores.

Coating of the composite may be accomplished with appropriate commercial inks, coatings, or paints known to adhere well to the chosen polar substrate. Such types of paints include solvent-based acrylic paints, polyurethane-based automotive paints, and polyester/ melamine automotive paints. For most of these paints, the formulations are proprietary. The polyolefin modified with the surface polar polymer layer will have paintability characteristics typical of the polar polymer standing alone.

Glass-reinforced polyolefin may also be utilized as the substrate for the process of the present invention. However, care in processing is required to prevent "lofting" of the glass fibers, which destroys the surface characteristics of the exterior layer.

### EXAMPLES

### Example I

A polymer of the composition of Example 52 of U.S. Patent 4,947,974 is processed into a 0.25 mm. film by compression molding the polymer (240 degrees C., ca. 20 metric tons). The film is then used as a tie-layer in a laminate between films prepared in a similar manner of (a) a polypropylene homopolymer of MFR 0.8, and (b) a poly(methyl methacrylate) of MW ca. 125,000. Here testing for adhesion is conducted as follows: a polypropylene floc carpet backed with a pressure- sensitive adhesive believed to be a butadiene- styrene polymer combined with a separate layer of the glycerol ester of colophony rosin is adhered to various plastics substrates under a pressure of 2000 psi
(14000 kPa). Samples are oven-aged at 39 degrees C. for 12 hours, and then is tested within 5 minutes of removal from the oven at 50% relative humidity on a Zwick tensile tester at 300 mm./min. peel rate. The adhesion is equivalent to that for an acrylic monolithic substrate, surpassing the performance of either polypropylene or ABS. No delamination at the surface or between acrylic polymer and polypropylene is noted.

### Example II

Films of a segmented copolymer of polypropylene/methyl methacrylate/co 5% butyl acrylate are prepared as in Example 1. In some cases, the films are prepared from a segmented copolymer made by the method of U.S. Patent 5,247,024. Films of 0.5 mm. thickness are prepared separately from poly(methyl methacrylate), as in Example 1. The polypropylene substrate utilized is 2 mm. in thickness. Painting with a solvent-based acrylic lacquer is conducted by a standard spray technique; adhesion as measured by the cross-hatch test of ASTM D3359-78 is excellent.

### Example III

In a manner similar to Example II, polar films of poly(vinyl chloride), polycarbonate (PC), ABS, and a commercial blend of PC and poly(butylene terephthalate) are prepared and laminated to polypropylene by means of the described tie layer. A strong knit line is observed by microscopy between the polar polymer and the tie layer.

### Example IV

In a manner similar to Example 2, a ternary layer structure is prepared wherein the polypropylene utilized contains at least about 30 parts of glass fiber per 100 parts of polypropylene. Again paints which adhere well to the polar films have acceptable adhesion to the composite.

## Claims

1. A composite of:
a) a polyolefin substrate;
b) a tie layer of a film or sheet of thickness from 0.0025 mm. to 0.8 mm. of segmented polymer having at least one segment of non-polar polyolefin comprising at least 50% by weight ethylene and/or propylene units and having at least one polar segment of polymer comprising at least 80 weight percent of alkyl methacrylate units, the weight-average molecular weight of all segments being above 20,000, the ratio of polar segment(s) to non-polar segment(s) being from 9:1 to 1:4; and
c) a sheet or film of polar polymer, from 0.0025 mm. to 50 mm. in thickness.

2. A composite as claimed in Claim 1 wherein the polyolefin substrate is polypropylene, optionally rubber-modified with rubbery polyolefin or glass-filled.

3. A composite as claimed in Claim 1 or 2 wherein the non-polar segments of the segmented copolymer are formed from propylene and wherein the polar segments contain at least 80 weight-percent of methyl methacrylate units.

4. A composite as claimed in any preceding Claim wherein the polar polymer in sheet or film form is of poly(methyl methacrylate), optionally rubber-modified with a multi-stage impact modifier, poly(vinyl chloride), acrylonitrile-butadienestyrene (ABS), polycarbonate and/or poly(butylene terephthalate).

5. A composite as claimed in any preceding claim wherein a paint, ink, or other coating is applied to the sheet or film (c) of polar polymer.

6. A process for imparting improved adhesion properties to polyolefin substrates which comprises applying thereto a layer of a film or sheet of thickness from 0.0025 mm. to 0.8 mm. of segmented polymer having at least one segment of non-polar polyolefin comprising at least 50% by weight ethylene and/or propylene units and having at least one polar segment of polymer comprising at least 80 weight percent of alkyl methacrylate units, the weight-average molecular weight of all segments being above 20,000, the ratio of polar segment(s) to non-polar segment(s) being from 9:1 to 1:4.

7. A process as claimed in Claim 6 wherein the non-polar segments of the segmented copolymer are formed from propylene and wherein the polar segments contain at least 80 weight-percent of methyl methacrylate units.

8. A process, as claimed in Claim 6 or 7, for making a composite which comprises applying a sheet or film of polar polymer, of from 0.0025mm to 50mm in thickness, to the layer of segmented polymer and, optionally, applying a paint, ink or other coating to the polar polymer.

9. A process as claimed in any of Claims 6 to 8 wherein the polyolefin substrate is polypropylene, optionally rubber-modified with rubbery polyolefin or glass-filled.

10. A process as claimed in Claim 8 or 9 wherein the polar polymer in sheet or film form is of poly(methyl methacrylate), optionally rubber-modified with a multi-stage impact modifier, poly(vinyl chloride), acrylonitrile-butadiene-styrene (ABS), polycarbonate and/or poly(butylene terephthalate).
